# FASCICULE DE BREVET EUROPEEN

(11) **EP 4 006 308 B1**
(45) Date de publication et mention de la délivrance du brevet: **30.08.2023**
(21) Numéro de dépôt: 21210809.6
(22) Date de dépôt: 26.11.2021
(51) Int. Cl.: F01D 9/04, F01D 25/24

(54) **DISPOSITIF ET PROCÉDÉ DE CONTRÔLE DES SECTEURS POUR L'ASSEMBLAGE DE DISTRIBUTEURS D'UNE TURBINE**
SEKTORKONTROLLVORRICHTUNG UND -VERFAHREN FÜR DEN ZUSAMMENBAU VON TURBINENLEITSCHAUFELN
DEVICE AND METHOD FOR CONTROLLING THE SECTORS FOR THE DISTRIBUTOR ASSEMBLY OF A TURBINE

(30) Priorité: 27.11.2020 FR 2012269
(43) Date de publication de la demande: 01.06.2022
(73) Titulaire: SAFRAN AIRCRAFT ENGINES, 75015 Paris (FR)
(72) Inventeur: DE AGOSTINI, Enguerrand Frédéric, 77550 MOISSY-CRAMAYEL (FR); ALVES DE MATOS, Carlos, 77550 MOISSY-CRAMAYEL (FR); CHAUVEL, Florian, 77550 MOISSY-CRAMAYEL (FR); EPARVIER, Baptiste, 77550 MOISSY-CRAMAYEL (FR); GAGLIARDO, Mathias, 77550 MOISSY-CRAMAYEL (FR); WYSIDI, Abner, 77550 MOISSY-CRAMAYEL (FR)
(74) Mandataire: Gevers & Orès

(56) Documents cités:
- EP-A1- 2 075 721
- EP-A1- 3 023 735
- EP-A1- 3 517 741

## Description

### DOMAINE TECHNIQUE

Le domaine de la présente invention est celui des moteurs aéronautiques et plus particulièrement celui des turbomachines.

En particulier, l'invention concerne un dispositif et un procédé de contrôle des secteurs destinés à l'assemblage de distributeurs de différents étages d'une turbine de turbomachine.

### TECHNIQUE ANTÉRIEURE

L'arrière-plan technique comprend notamment les documents EP 2 075 721 A1 et EP 3 517 741 A1. Notamment EP 2 075 721 divulgue un procédé de choix d'un arrangement de secteurs pour un distributeur pour turbomachine comportant les étapes suivantes: On crée par digitalisation une base de données des modèles numériques tridimensionnels de secteurs; on fixe un critère de choix d'un arrangement de secteurs et une valeur souhaitée pour ce critère; pour différents arrangements évalués, on détermine par montage virtuel les positions relatives des secteurs montés ensemble, et en fonction de celles-ci, la valeur du critère de choix pour l'arrangement évalué; on retient l'arrangement pour lequel le critère de choix a la valeur la plus proche de la valeur souhaitée. Ce procédé permet d'optimiser le choix des secteurs dans un distributeur.

Les turbomachines aéronautiques comprennent classiquement plusieurs modules tels qu'un compresseur basse pression (BP) suivi d'un compresseur haute pression (HP), une chambre de combustion, une turbine haute pression suivie d'une turbine basse pression, qui entraînent le compresseur BP ou HP correspondant, et un système d'éjection des gaz.

Chacune des turbines de telles machines comprennent typiquement plusieurs étages comportant chacun une rangée annulaire, ou couronne, d'aubes fixes portées par un carter de la turbine et une rangée annulaire d'aubes montées rotatives autour d'un axe central de rotation. Les couronnes d'aubages internes fixes d'une turbine sont également appelées distributeurs.

Dans le but de faciliter leur montage et de réduire leur coût de fabrication, les couronnes d'aubages fixes sont souvent réalisées sous la forme d'un assemblage de secteurs angulaires qui sont juxtaposés les uns à côté des autres jusqu'à former une couronne entière d'aubages fixes.

Il est nécessaire d'assurer une étanchéité au moins relative entre deux secteurs angulaires adjacents afin d'éviter des fuites d'air particulièrement préjudiciables notamment au bon refroidissement de ces secteurs et risquant en outre de conduire à une diminution des performances du moteur, voire à des endommagements de pièces situées en aval.

Dans ce but, il est connu d'interposer des languettes, ou plaquettes, d'étanchéité entre les secteurs voisins. De telles plaquettes sont généralement logées dans des fentes sensiblement axiales et/ou radiales pratiquées en vis-à-vis dans des faces latérales adjacentes des secteurs. Le document FR3033827 décrit un tel ensemble à plaquettes d'étanchéité pour turbine à gaz.

Ces plaquettes d'étanchéité sont toutefois peu aisées à monter.

Conventionnellement, la préparation des secteurs angulaires en vue de leur assemblage pour former les distributeurs d'une turbine est essentiellement manuelle. En effet, un opérateur identifie un à un les secteurs afin de déterminer à quel distributeur ils correspondent. L'opérateur contrôle ensuite visuellement la qualité et la conformité de chaque secteur, puis il met en place de la graisse dans les fentes des secteurs en vue de l'insertion des plaquettes d'étanchéité. L'opérateur identifie le type des plaquettes à insérer et les insère l'une après l'autre dans les fentes d'une face du secteur, et ce pour chaque secteur. Cette étape d'insertion des plaquettes d'étanchéité est minutieuse et par conséquent longue.

En outre, certains secteurs angulaires pour des distributeurs prédéterminés nécessitent également d'être équipés d'un dispositif anti-usure, ou clinquant, permettant de limiter l'usure entre un crochet du carter et un moyen d'accrochage du secteur du distributeur sur le carter. Le document FR2938872 décrit un tel dispositif anti-usure pour un distributeur de turbine d'une turbomachine aéronautique.

Par exemple, la turbine arrière du moteur LEAP comporte sept distributeurs formés de 146 secteurs, et nécessite ainsi l'insertion de 834 plaquettes et la pose de 78 clinquants en vue de leur assemblage.

Les opérations répétitives pour la préparation des secteurs de distributeurs peuvent être à l'origine de troubles musculo-squelettiques notamment au niveau des mains dus à l'utilisation répétitive de pistolets ou de seringues de graissage et à l'insertion des plaquettes. Ces opérations répétitives peuvent être également source d'erreurs donc d'une perte de qualité sur l'assemblage final des distributeurs.

Compte-tenu de la demande grandissante en moteur de ce type, il existe donc un besoin pour réduire les cycles de montage tout en garantissant une qualité d'assemblage maximale.

### RÉSUMÉ DE L'INVENTION

A cet effet, l'invention propose un dispositif de contrôle des secteurs pour l'assemblage des distributeurs d'une turbine, chaque distributeur étant formé d'un assemblage de secteurs juxtaposés les uns aux autres, chaque secteur comportant une référence, le dispositif comportant :
- un système automatisé d'identification du secteur comprenant un moyen de lecture de la référence du secteur,
- une base de données des références des secteurs destinés à former les distributeurs de la turbomachine, et
- un moyen d'association de la référence lue du secteur à un distributeur déterminé de la turbomachine.

Avantageusement, l'invention permet d'augmenter la rentabilité de la ligne de production en supprimant des tâches répétitives de la préparation des secteurs.

En effet, l'installation selon l'invention permet de remplacer les opérations manuelles de la technique antérieure par des opérations automatisées et donc plus facilement reproductibles et plus rapidement.

En outre, l'automatisation de la préparation des secteurs formant les distributeurs et notamment l'insertion des plaquettes d'étanchéité permet de réduire fortement le risque de troubles musculo-squelettiques des opérateurs.

Un chariot d'entrée est rempli de l'ensemble des secteurs destinés à former l'ensemble des distributeurs des différents étages d'une turbine, notamment d'une turbine basse pression. Ainsi, le procédé d'assemblage des distributeurs est implémenté une seule fois pour tout un moteur limitant ainsi le nombre d'interventions d'opérateurs et augmentant ainsi l'efficacité et la rentabilité de l'installation.

De même, un chariot de sortie est destiné à recevoir l'ensemble des secteurs préassemblés en distributeur sur chaque plateau, limitant également le nombre d'interventions d'opérateurs et de ce fait augmentant l'efficacité de l'installation. L'opérateur devient alors un superviseur de l'installation veillant au bon fonctionnement de l'installation et au bon déroulement du procédé d'assemblage des secteurs. L'automatisation de l'assemblage permet ainsi d'augmenter la répétabilité des étapes du procédé tout en garantissant un contrôle en permanence de l'assemblage des distributeurs de turbine assurant ainsi un gain en qualité.

En outre, l'invention permet ainsi de fortement diminuer le temps d'assemblage des distributeurs d'une turbine d'un tel moteur passant d'une dizaine d'heures à quelques dizaines de minutes.

Le dispositif selon l'invention peut comprendre une ou plusieurs des caractéristiques suivantes, prises isolément les unes des autres ou en combinaison les unes avec les autres :
- les références des secteurs comportent des caractères variants d'un secteur à un autre secteur et des caractères invariants d'un secteur à un autre secteur d'un même distributeur, le système automatisé d'identification du secteur comprend un moyen de vérification de chaque caractère invariant lu par comparaison avec les caractères invariants des références de la base de données, et un moyen d'identification de chaque caractère variant lu par comparaison avec les caractères variants des références de la base de données ;
- chaque secteur comprend une plateforme intérieure, une plateforme extérieure, des aubes comprenant chacune un bord de fuite et étant fixées entre ladite plateforme intérieure et ladite plateforme extérieure, et un bloc de matériau abradable en nid d'abeilles qui s'étend intérieurement à la plateforme intérieure entre les faces latérales, et dans lequel la base de données comprend un jeu de caractéristiques techniques du secteur associé à chaque référence, le jeu de caractéristiques techniques comprenant au moins un nombre déterminé de fentes ménagées dans des faces latérales du secteur, des caractéristiques techniques des fentes, des caractéristiques physiques des plaquettes destinées à être insérées dans chacune des fentes, un nombre déterminé d'aubes du secteur, une position angulaire du secteur dans le distributeur déterminé ;
- le dispositif de contrôle comprend un système automatisé de contrôle de qualité du secteur configuré pour contrôler la qualité en fonction des caractéristiques techniques du secteur des fentes ménagées dans les parois transversales du secteur, des bords de fuite et des surfaces des aubes, et du bloc de matériau abradable en nid d'abeilles ;
- le dispositif de contrôle comprend un moyen de capture d'images du secteur selon différentes orientations du secteur par rapport au moyen de capture d'images, le secteur étant supporté par un moyen de support du secteur mobile par rapport au moyen de capture d'images.

L'invention concerne également une installation pour le pré-assemblage des distributeurs d'une turbine, la turbine comprenant une pluralité de distributeurs formés chacun d'un assemblage de secteurs juxtaposés les uns aux autres, l'installation comportant :
- un chariot d'entrée configuré pour supporter une pluralité de secteurs destinés à former les distributeurs de la turbine,
- un bras robot comportant un moyen de préhension dans le chariot d'entrée d'un secteur, et
- un dispositif de contrôle tel que décrit précédemment configuré pour contrôler un secteur saisi par le moyen de préhension du bras robot.

L'invention concerne également un procédé de contrôle des secteurs pour l'assemblage des distributeurs d'une turbine au moyen d'un dispositif de contrôle tel que décrit précédemment, caractérisé en ce qu'il comprend, pour chaque secteur les étapes automatisées de :
- lecture de la référence du secteur, et
- association de la référence lue du secteur à un distributeur déterminé de la turbine en fonction de la base de données des références des secteurs destinés à former les distributeurs de la turbine.

Le procédé de contrôle selon l'invention peut comprendre une ou plusieurs des caractéristiques suivantes, prises isolément les unes des autres ou en combinaison les unes avec les autres :
- les références des secteurs comportent des caractères variants d'un secteur à un autre secteur et des caractères invariants d'un secteur à un autre secteur d'un même distributeur, le procédé comprenant une étape automatisée d'identification du secteur comprenant la vérification de chaque caractère invariant lu par comparaison avec les caractères invariants des références de la base de données, et l'identification de chaque caractère variant lu par comparaison avec les caractères variants des références de la base de données ;
- le procédé de contrôle comporte une étape automatisée de contrôle de qualité du secteur en fonction des caractéristiques techniques du secteur, comprenant le contrôle de la qualité des fentes ménagées dans les parois transversales du secteur, des bords de fuite et des surfaces des aubes, et du bloc de matériau abradable en nid d'abeilles.
- les distributeurs sont des distributeurs basse pression.

L'invention concerne également un produit programme d'ordinateur comprenant une ou plusieurs séquences d'instructions stockées qui sont accessibles à un processeur et qui, lorsqu'elles sont exécutées par le processeur, conduisent le processeur à exécuter les étapes automatisées du procédé de contrôle tel que décrit précédemment.

Sauf indication contraire, les termes tels que "calcul", "génération", ou similaire, se réfèrent à l'action et/ou aux processus d'un ordinateur ou système informatique, ou dispositif informatique électronique similaire, qui manipule et/ou transforme des données représentées comme des quantités physiques, telles qu'électroniques, dans les registres et/ou mémoires du système informatique en d'autres données représentées de manière similaire comme des quantités physiques dans les mémoires du système informatique, registres ou autres dispositifs de stockage, de transmission ou d'affichage d'informations.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 est une vue schématique en coupe d'une turbomachine selon l'état de la technique,
- la figure 2 est une vue de détail en coupe d'une turbine basse pression de la turbomachine de la figure 1 comportant sept étages,
- la figure 3 est une vue en bout d'un aubage de turbine comportant un assemblage de secteurs angulaires d'aubage,
- la figure 4 est une vue en perspective d'un secteur d'aubage d'un des distributeurs de la turbine de la figure 2,
- la figure 5 est une vue en coupe radiale d'un système d'attache d'un secteur d'aubage de distributeur d'un deuxième étage de la turbine basse pression de la figure 2, la plateforme extérieure du secteur étant équipé d'un dispositif anti-usure,
- la figure 6 est une vue en perspective de l'assemblage d'un dispositif anti-usure sur le secteur de la figure 4,
- la figure 7 représente une vue de dessus d'une installation pour le pré-assemblage des distributeurs des différents étages d'une turbine selon l'invention,
- la figure 8 illustre une vue schématique de la préhension d'un secteur dans un chariot d'entrée par un bras robot de l'installation de la figure 7,
- la figure 9 illustre une vue schématique en perspective d'un chariot de sortie de l'installation de la figure 7,
- la figure 10 représente une vue schématique et agrandie d'un système de contrôle de la qualité d'un secteur supporté par un bras robot de l'installation de la figure 7,
- la figure 11 illustre une vue schématique agrandie d'un système de préparation d'une plaquette à insérer dans un secteur de l'installation de la figure 7,
- la figure 12 représente une vue agrandie du système de préparation de la figure 10 recevant un jet de gaz par un système de mélange,
- la figure 13 illustre une vue schématique agrandie d'un système de graissage comportant un moyen d'injection d'un matériau gras dans les fentes d'un secteur,
- la figure 14 est un organigramme d'un procédé pour l'assemblage des distributeurs d'une turbine selon l'invention,
- la figure 15 est une vue schématique de l'identification de zones liées aux fentes de la plateforme extérieure d'un secteur,
- la figure 16 est une vue schématique de l'identification de zones liées aux fentes de la plateforme intérieure d'un secteur,
- la figure 17 est une vue schématique de l'identification de deux plaquettes préhensibles dans un bac du système de préparation de plaquettes de la figure 11,
- la figure 18 est une vue schématique de l'étape automatisée d'insertion d'une plaquette dans une fente d'un secteur, et
- la figure 19 est une vue schématique de l'étape de dépose d'un secteur équipé sur un plateau associé au distributeur correspondant.

Sur les différentes figures, des chiffres de référence identiques désignent des pièces identiques ou ayant des fonctions similaires. En outre, les différents éléments ne sont pas nécessairement représentés à l'échelle afin de présenter une vue permettant de faciliter la compréhension de l'invention.

Par direction axiale, on désignera par extension toute direction parallèle à un axe A d'une turbomachine, et par direction radiale toute direction perpendiculaire et s'étendant radialement par rapport à le direction axiale.

### DESCRIPTION DETAILLÉE

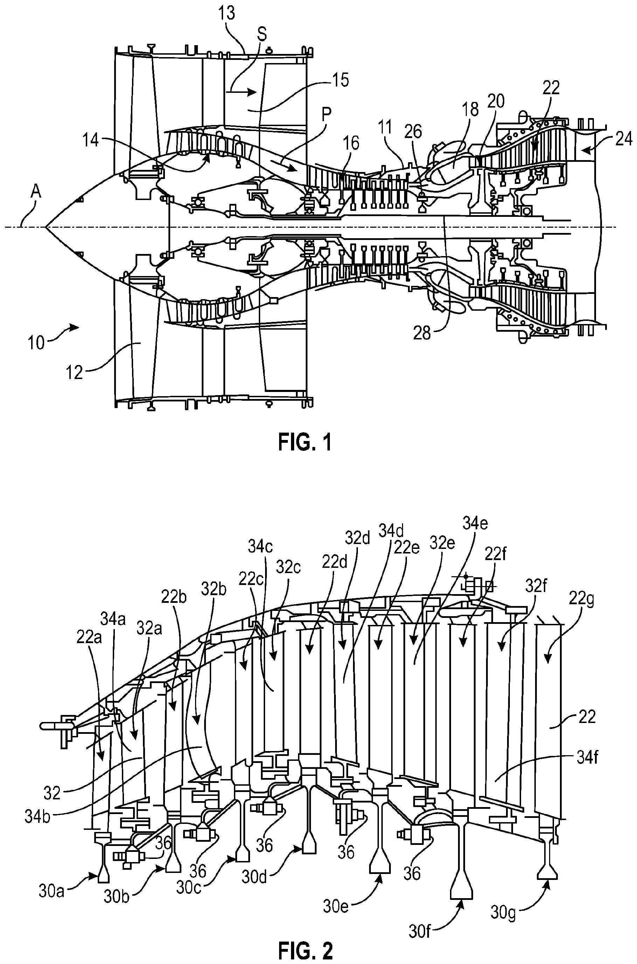

La figure 1 illustre une turbomachine 10 d'axe longitudinal A du type à double flux. Une telle turbomachine 10, ici un turboréacteur 10, comporte de manière connue une soufflante 12, un compresseur basse pression (BP) 14, un compresseur haute pression (HP) 16, une chambre de combustion 18, une turbine haute pression (HP) 20, une turbine basse pression (BP) 22 et une tuyère d'échappement 24. Le rotor du compresseur HP 16 et le rotor de la turbine HP 20 sont reliés par un arbre haute pression HP 26 et forment avec lui un corps haute pression. Le rotor du compresseur BP 14 et le rotor de la turbine basse pression BP 22 sont reliés par un arbre BP 28 et forment avec lui un corps basse pression.

Les corps haute et basse pression sont traversés par un flux d'air primaire "P" et la soufflante 12 produit un flux d'air secondaire "S" qui circule dans le turboréacteur 10, entre un carter 11 et une enveloppe externe 13 du turboréacteur, dans un canal de flux froid 15. En sortie de la tuyère 24, les gaz issus du flux primaire "P" sont mélangés au flux secondaire "S" pour produire une force de propulsion, le flux secondaire "S" fournissant ici la majorité de la poussée.

Les compresseurs BP 14 et HP 16 et les turbines HP 20 et BP 22 comportent chacun respectivement plusieurs étages de compresseur ou de turbine.

Comme l'illustre par exemple la figure 2, la turbine BP 22 comporte plusieurs roues d'aubages mobiles 22a, 22b, 22c, 22d, 22e, 22f, 22g de turbine dont les aubages sont portés par des disques 30a, 30b, 30c, 30d, 30e, 30f, 30g associées qui sont assemblées les unes aux autres par des boulons 36.

La turbine BP 22 comporte par ailleurs des couronnes d'aubages fixes 32a, 32b, 32c, 32d, 32e, 32f d'un distributeur 32 qui sont intercalées entre les roues d'aubages mobiles 22a, 22b, 22c, 22d, 22e, 22f, 22g de turbine.

Chaque couronne d'aubages fixes 32a, 32b, 32c, 32d, 32e, 32f de distributeur est formée d'un assemblage de secteurs 34a, 34b, 34c, 34d, 34e, 34f de couronne d'aubages fixes, assemblés autour de l'axe A de la turbomachine sur 360° de manière à constituer une couronne d'aubages fixes 32a, 32b, 32c, 32d, 32e, 32f complète autour de l'axe A de la turbomachine.

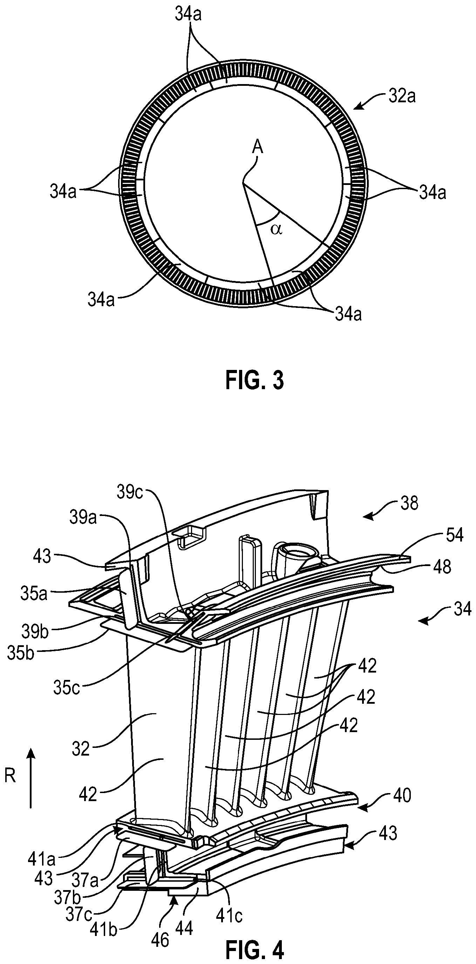

La figure 3 représente à titre d'exemple simplifié un aubage 32a de distributeur constitué d'un assemblage de dix secteurs d'aubage 34a. Bien entendu, le nombre de secteurs angulaires pour former un distributeur peut être différent d'un étage à l'autre de la turbine. Par exemple, les aubages 32 des distributeurs des différents étages d'une turbine basse pression sont constitués d'un assemblage de 21 ou 26 secteurs d'aubage 34.

Comme l'illustre la figure 3, chaque secteur 34a s'étend suivant un angle déterminé a autour de l'axe de la couronne 32a, qui correspond à l'axe A de la turbomachine 10 précédemment illustrée sur la figure 1.

Par « inférieur » ou « intérieur », on désignera tout positionnement proche de l'axe A selon la direction radiale alors que par "supérieur" ou « extérieur », on désignera tout positionnement plus éloigné de l'axe A selon la direction radiale que le positionnement inférieur. Enfin, par "transversal" on désignera tout plan ou toute surface comprenant l'axe longitudinal A et parallèle à un plan de section d'un secteur 34.

Conventionnellement, comme l'illustre la figure 4, chaque secteur 34 comporte, par rapport à l'axe A de l'aubage 32, une plateforme 38 radialement extérieure, une plateforme 40 radialement intérieure, au moins deux aubes 42 qui s'étendent sensiblement suivant une direction radiale R entre lesdites plateformes 38, 40. Dans l'exemple illustré, le secteur 34 comporte six aubes 42. Toutefois, le nombre d'aubes peut différer d'un étage à l'autre de la turbine. Chaque secteur comporte en outre au moins un bloc 44 de matériau abradable en nid d'abeilles qui s'étend par conséquent intérieurement lui aussi à la plateforme intérieure 40 entre des extrémités transversales (non représentées) du secteur angulaire 34.

Une face radialement intérieure d'étanchéité radiale 46 du bloc 44 de matériau abradable en nid d'abeilles est configurée pour coopérer avec des léchettes d'un joint à labyrinthe porté par un rotor de la turbomachine.

Conventionnellement, comme l'illustre la figure 4, l'étanchéité entre des secteurs adjacents 34 est réalisée par l'intermédiaire de plaquettes 35a, 35b, 35c, 37a, 37b, 37c qui sont reçues dans des logements ou fentes 39a, 39b, 39c, 41a, 41b, 41c qui sont agencés en regard les uns des autres entre les secteurs 34 pour former une barrière à un flux de recirculation de l'aval vers l'amont entre les secteurs 34. Selon l'exemple illustré, ce secteur 34 comporte six fentes ménagées dans des faces latérales 43 du secteur dont trois fentes supérieures 39a, 39b, 39c, formées dans sa plateforme extérieure 38, qui reçoivent chacune une plaquette 35a, 35b, 35c et trois fentes inférieures 41a, 41b, 41c formées dans sa plateforme intérieure 40, qui reçoivent chacune une plaquette 37a, 37b, 37c. L'orientation des fentes et donc des plaquettes peut être tangentielle (39b, 41a, 41c), radiale (39a, 41b) ou d'orientation quelconque (39c).

Les fentes de chaque secteur qu'elles soient ménagées dans les surfaces latérales de la plateforme extérieure 38 ou dans la plateforme intérieure 40 forment un motif comprenant au moins une intersection de deux fentes. Dans l'exemple illustré, les fentes ménagées dans les surfaces latérales de la plateforme extérieure 38 un motif du type K tandis que les fentes ménagées dans s surfaces latérales de la plateforme intérieure 40 forment un motif du type H. Bien entendu, le motif que ce soit pour les fentes de la plateforme intérieure 40 ou extérieure 38 peuvent varier d'un étage de la turbine à l'autre.

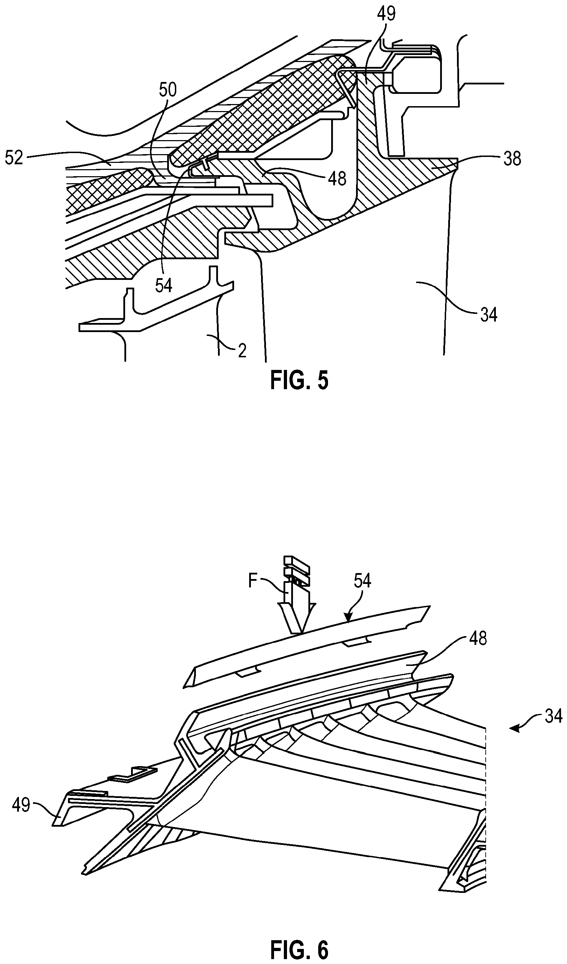

En se référant à la figure 5, pour certains étages de turbine basse pression, la plateforme extérieure 38 d'un secteur 34 de distributeur comporte un rail antérieur 48 et un rail postérieur 49. Le rail antérieur 48 repose sur un crochet 50 du carter de turbine basse pression 52. Le rail antérieur 48 a, en coupe, la forme d'une langue s'étendant radialement et se terminant par une extrémité arrondie, sur laquelle est fixé un dispositif anti-usure 54 ou clinquant qui la recouvre en épousant sa forme. Sa coupe radiale présente une forme en U, apte à envelopper l'extrémité de la langue du rail antérieur 48 et il se prolonge à sa partie inferieure jusqu'à dépasser axialement de l'extrémité postérieure du crochet 50. Le clinquant est intercalé entre ledit moyen d'accrochage antérieur et ledit support lorsque le secteur est assemblé au carter afin d'assurer ainsi l'interface mécanique entre le rail antérieur 48 et le crochet 50 et de supprimer tout contact direct entre eux. Tel qu'illustré sur la figure 6, le clinquant 54 est fixé par clipsage sur le rail antérieur 48 selon la flèche notée F.

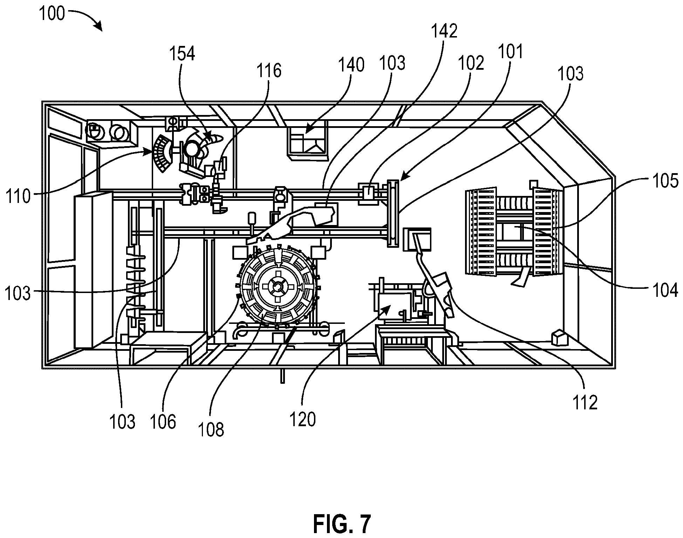

La figure 7 illustre une installation 100 pour le pré-assemblage des distributeurs des différents étages d'une turbine selon un mode préféré de l'invention. L'installation selon l'invention est adaptée à préparer, de façon automatisée, les différents secteurs de l'ensemble des distributeurs des différents étages d'une turbine, notamment d'une turbine basse pression.

L'installation comporte un support de stockage lisible par ordinateur sur lequel est enregistré une ou plusieurs séquences d'instructions formant un programme d'ordinateur, un processeur et une interface homme-machine ou console (non illustrée) configurée pour commander les différents éléments automatisés de l'installation. Les séquences d'instructions sont accessibles par le processeur et conduisent le processeur à exécuter les étapes automatisées du procédé de pré-assemblage selon l'invention lorsqu'elles sont exécutées par le processeur. Elles permettent ainsi de commander les dispositifs automatisés, les bras robots et le dispositif de transport de l'installation.

Une telle installation 100 selon l'invention comporte plusieurs unités fonctionnelles qui vont être décrites par la suite, et un dispositif de transport 101 adapté pour transporter des secteurs 34 notamment entre les différentes unités fonctionnelles afin qu'elles interagissent avec les secteurs transportés.

Les différentes unités fonctionnelles sont par exemple aptes à insérer des plaquettes d'étanchéité dans les fentes des secteurs, à nettoyer les fentes des secteurs avant l'insertion, à contrôler la qualité des secteurs, à équiper des secteurs avec des clinquants le cas échéant... De telles unités fonctionnelles seront décrites en détail ci-après.

Le dispositif de transport 101 est automatisé et comprend des palettes 102, chacune apte à transporter un secteur 34. Les secteurs 34 sont supportés par les palettes 102 et bloqués dans une position et une orientation prédéfinies. Par exemple, le dispositif de transport 101 comporte un réseau de rails linéaires 103 permettant le déplacement des palettes entre les différentes unités fonctionnelles.

L'installation comporte en outre plusieurs bras robots comprenant chacun une base fixée à un bâti de l'installation, un bras articulé et au moins un outil agencé à l'extrémité libre du bras articulé. De façon connue, l'outil est le plus souvent un outil de préhension, par exemple une pince à deux ou trois doigts. Les bras robots peuvent également supporter d'autres équipements et accessoires, par exemple une caméra. De tels bras robots sont adaptés pour positionner et orienter l'outil porté par son extrémité de manière précise selon six degrés de libertés.

Chaque bras robot est adapté et configuré pour effectuer un nombre déterminé d'actions différentes de celles effectuées par un autre bras robot, les bras robots étant alors en action simultanément permettant ainsi de réduire le temps de préparation des secteurs et leur pré-assemblage pour former les distributeurs de la turbine. En outre, les bras robots peuvent agir avec plusieurs unités fonctionnelles permettant de réduire le nombre de bras robots nécessaires pour le pré-assemblage des distributeurs d'une turbine et par conséquent d'optimiser l'espace nécessaire à une telle installation.

L'installation 100 comprend en outre :
- un dock d'entrée 104 pour recevoir un chariot d'entrée 105,
- un dispositif 110 automatisé d'insertion de plaquettes d'étanchéité 35, 37, et
- un dock de sortie 106 pour recevoir un chariot de sortie 108.

Le dispositif 110 automatisé d'insertion de plaquettes d'étanchéité 35, 37 sera détaillé par la suite.

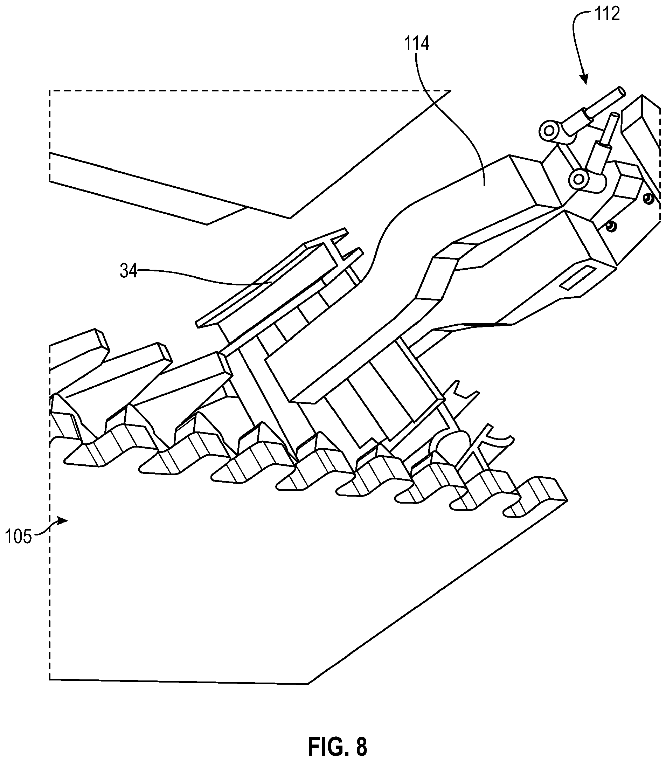

Le chariot d'entrée 105 est configuré pour transporter et supporter un ensemble de secteurs 34a, 34b, 34c, 34d, 34e, 34f tels que décrit précédemment destinés à former l'ensemble des distributeurs 32a, 32b, 32c, 32d, 32e, 32f des différents étages de la turbine. Plus précisément, l'ensemble de secteurs comprend autant de sous-ensembles que d'étages à la turbine et donc que de distributeurs à assembler pour la turbine. Ainsi, chaque secteur est associé à un distributeur déterminé de la turbine. L'installation 100 comporte un premier bras robot 112 apte à saisir un secteur 34 du chariot d'entrée 105 et à le déposer sur une palette du dispositif de transport. A cet effet et tel qu'illustré sur la figure 8, le premier bras robot 112 comporte un outil de préhension 114, par exemple une pince, configuré pour saisir un secteur 34 à la fois dans le chariot d'entrée 105 et à le déposer sur une palette 102 du dispositif de transport.

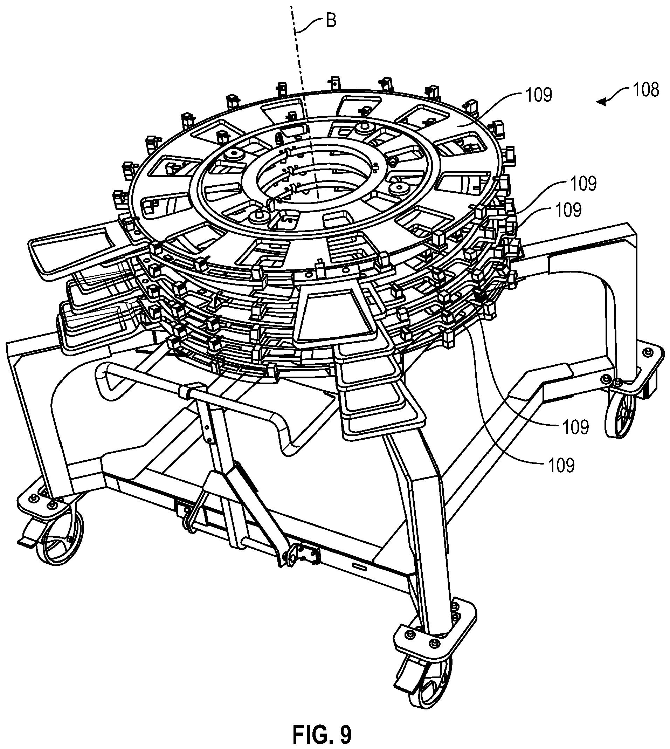

Un exemple de chariot de sortie 108 est illustré sur la figure 9 et comprend une pluralité de plateaux annulaires horizontaux 109, chaque plateau 109 étant associé à un distributeur d'un étage de la turbine à assembler. Ainsi, chaque plateau 109 est destiné à recevoir et supporter des secteurs équipés d'un sous-ensemble donc associés à un distributeur déterminé de manière à pouvoir mettre les secteurs équipés bout à bout pour former le distributeur. Ainsi, les plaquettes 35, 37 des secteurs équipés sont agencées en vis-à-vis des fentes 39, 41 d'un secteur 34 adjacent pour y être insérées au cours de l'assemblage final du distributeur. Par secteur équipé on entend un secteur 34 équipé des plaquettes 39, 41 dans une de ses faces latérales et également équipé d'un clinquant 54 le cas échéant pour un certain nombre de secteurs prédéfinis en fonction de l'étage de la turbine auquel les secteurs sont destinés.

Les plateaux annulaires sont coaxiaux et mobiles indépendamment les uns des autres autour de leur axe commun, noté B.

L'installation 100 comporte un deuxième bras robot 142 adapté pour saisir un secteur 34 équipé et transporté par une palette 102 du dispositif de transport 101 et à le déposer et le positionner sur le plateau 109 associé au distributeur déterminé de manière à pré-assembler le distributeur déterminé.

A cet effet, le dock de sortie 106 comporte un premier actionneur (non illustré) configuré pour soulever les plateaux supérieurs au plateau 109 sur lequel le secteur équipé doit être posé et ainsi désengager les plateaux supérieurs afin de rendre le plateau 109 sur lequel le secteur équipé doit être posé accessible.

De plus, le dock de sortie 106 comporte un deuxième actionneur (non illustré) configuré pour mettre en rotation sur lui-même le plateau 109 sur lequel le secteur équipé doit être posé afin de rendre accessible l'emplacement où doit être positionné le secteur équipé.

L'installation 100 comporte en outre avantageusement :
- un dispositif de contrôle 120 des secteurs 34,
- un système automatisé de pose des dispositifs anti-usure, et
- un système automatisé de nettoyage 140 des fentes des secteurs 34.

Le dispositif de contrôle 120 comporte un système d'identification 122 et un système de contrôle de la qualité du secteur 124.

Le système d'identification 122 est automatisé et configuré pour identifier le secteur 34 supporté par un bras robot, de préférence par le premier bras robot 112. En d'autres termes, le système automatisé d'identification 122 est configuré pour identifier à quel distributeur 32 de la turbine est associé le secteur 34 supporté par l'outil de préhension 114 du premier bras robot 112. Ainsi, le système d'identification 122 du secteur est également configuré pour identifier le plateau 109 du chariot de sortie 108, associé au distributeur 32 identifié, sur lequel déposer le secteur 34 et le positionner au bon endroit pour le pré-assemblage du distributeur déterminé.

A cet effet, chaque secteur 34 comporte un marquage surfacique tel qu'une référence, de préférence alphanumérique, et le système d'identification 122 comporte un moyen de lecture de la référence communiquant avec un moyen d'acquisition, par exemple une caméra associée à un logiciel de reconnaissance de caractères, le moyen d'acquisition étant supporté par un autre bras robot de l'installation, de préférence par le deuxième bras robot 142.

Le dispositif de contrôle 120 des secteurs comporte une base de données des références de l'ensemble des secteurs destinés à former les distributeurs de la turbine, et un moyen d'association de la référence lue à un distributeur 32 identifié de la turbine. La base de données des références prend en compte notamment la typographie, la police et la taille des différents caractères qui composent la référence. Les références des secteurs 34 comportent des caractères variants d'un secteur à un autre secteur et des caractères invariants d'un secteur à un autre secteur pour un même distributeur 32. Le système automatisé d'identification 122 du secteur comprend avantageusement un moyen de vérification de chaque caractère invariant lu par comparaison avec les caractères invariants des références de la base de données, et un moyen d'identification de chaque caractère variant lu par comparaison avec les caractères variants des références de la base de données. Ainsi, cette lecture telle que décrite précédemment permet de limiter le risque de lire un caractère à la place d'un autre et donc de fiabiliser la lecture des références des secteurs.

De préférence, la base de données comprend un jeu de caractéristiques techniques associé à chaque référence et donc à chaque secteur. Le jeu de caractéristiques techniques comprend au moins un nombre déterminé de fentes ménagées dans des faces latérales de chaque secteur, des caractéristiques techniques des fentes telles que l'orientation et les dimensions des fentes, des caractéristiques physiques des plaquettes destinées à être insérées dans chacune des fentes, par exemple la forme et les dimensions des plaquettes, un nombre déterminé d'aubes de chaque secteuret la position angulaire finale du secteur dans le distributeur déterminé. La base de donnée comporte le nombre de dispositifs anti-usure destinés à équiper certains secteurs et à quel secteur ils sont destinés.

Le système de contrôle de la qualité 124 du secteur est automatisé et adapté pour contrôler la qualité du secteur supporté par un bras robot, de préférence par le premier bras robot 112. Le système de contrôle 124 est configuré pour contrôler la conformité du secteur aux normes de qualité pour l'industrie aéronautique.

En particulier, le système de contrôle 124 est configuré pour contrôler au moins la qualité des fentes 35, 37 ménagées dans les parois transversales du secteur 34, la qualité des bords de fuite et des surfaces des aubes 42 du secteur 34 et la qualité du bloc 44 de matériau abradable en nid d'abeilles du secteur 34.

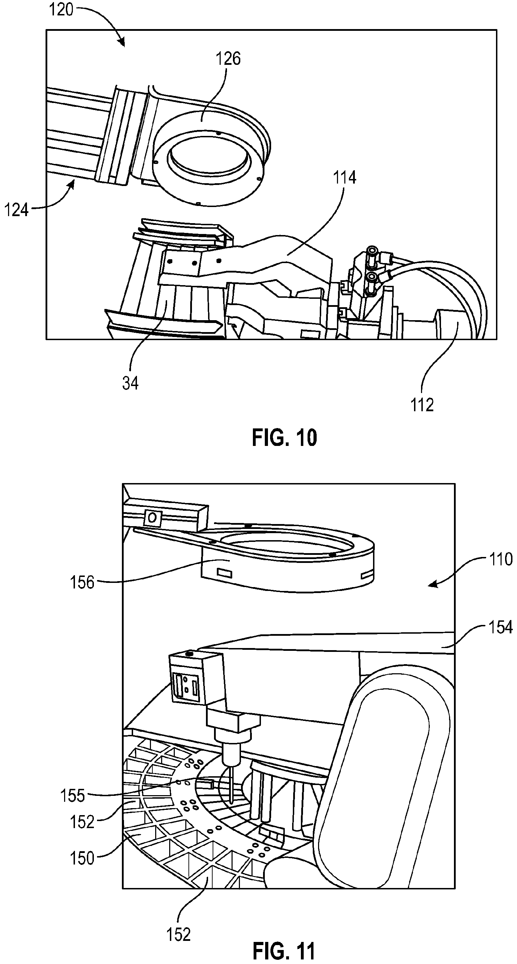

A cet effet, le système de contrôle 124 comporte un moyen de capture d'images 126 du secteur 34pendant que le secteur 34 est supporté par le premier bras robot 112 tel qu'illustré sur la figure 10. Ainsi, le premier bras robot 112 est adapté pour orienter le secteur 34 selon différentes orientations par rapport au moyen de capture d'images, par exemple une caméra.

Le système de contrôle 120 automatisé permet un suivi des secteurs utilisés pour le pré-assemblage des distributeurs de la turbine et améliore ainsi la qualité et la fiabilité de leur pré-assemblage et donc de leur assemblage final.

Le système de pose d'un dispositif anti-usure ou clinquant est également automatisé. Il est apte à interagir avec un certain nombre de secteurs prédéfinis transportés par le dispositif automatisé de transport 101.

Le système de pose de clinquant comporte un support multiple des clinquants destinés à équiper les secteurs prédéfinis et un support intermédiaire.

Un bras robot de l'installation, de préférence le premier bras robot 112, est adapté et configuré pour saisir un clinquant du support multiple et le déposer sur le support intermédiaire. Par exemple, le premier bras robot 112 comporte un autre moyen de préhension, tel qu'une pince de petites dimensions adaptée pour saisir le clinquant. Le support intermédiaire est conformé pour supporter le clinquant dans une position et une orientation prédéterminées de manière à permettre la fixation du clinquant sur le secteur. Le premier bras robot 112 est configuré pour saisir ensuite le secteur 34 d'une palette 102 de transport et le positionner et l'orienter par rapport au clinquant posé sur le support intermédiaire de manière à fixer le clinquant sur le secteur. De préférence, le clinquant 54 est fixé, par exemple par clipsage, de manière à envelopper l'extrémité antérieure du moyen d'accrochage antérieur 48 et pour être intercalé entre ledit moyen d'accrochage antérieur 48 du secteur 34 et le crochet 50 du carter 52 lorsque le distributeur est fixé au carter.

Le système de nettoyage 140 est automatisé et configuré pour nettoyer les fentes 35, 37 d'un secteur 34 supporté par un bras robot, de préférence le deuxième bras robot 142. De préférence, le système 140 automatisé de nettoyage comprend un système à air comprimé pour nettoyer l'intérieur des fentes 39, 41.

Le deuxième bras robot 142 est configuré pour saisir le secteur 34 d'une palette 102 de transport et le positionner et l'orienter par rapport au système de nettoyage 140, notamment par rapport à une buse de jet d'air comprimé pour nettoyer l'intérieur des fentes 39, 41.

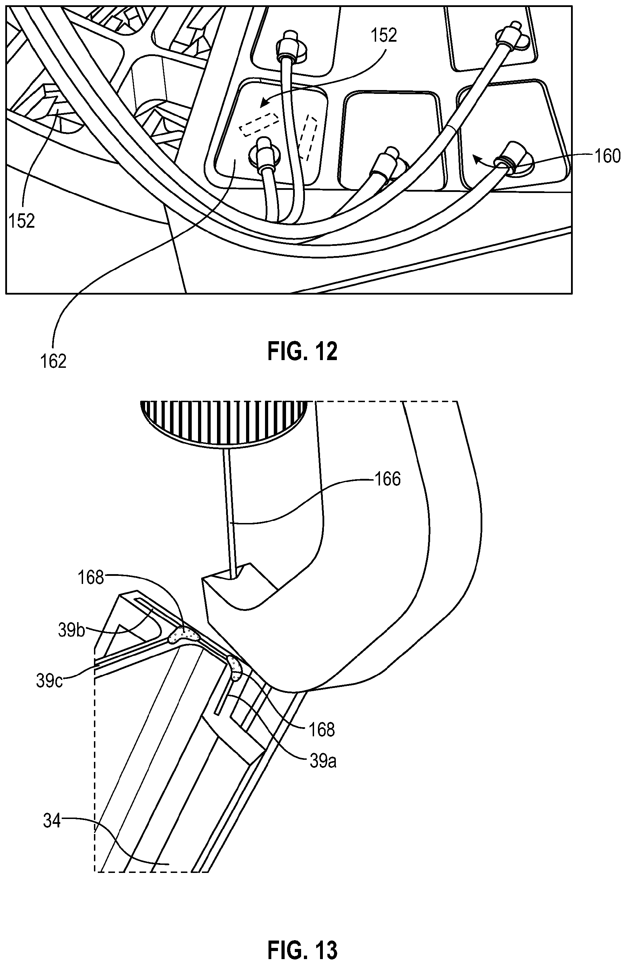

L'installation 100 comporte en outre avantageusement un système de graissage 164 automatisé et apte à injecter un matériau gras dans au moins une portion des fentes 39, 41 d'un secteur 34 supporté par un bras robot, de préférence le deuxième bras robot 142 de l'installation. En référence à la figure 13, le système de graissage 164 comporte notamment un moyen d'injection 166 d'un matériau gras 168, tel que de la graisse. Le matériau gras 168 est injecté au moins dans chaque intersection entre deux fentes du secteur. Le deuxième bras robot 142 est configuré pour saisir le secteur 34 d'une palette 102 de transport et le positionner et l'orienter par rapport au système de graissage 164, notamment par rapport au moyen d'injection 166 pour déposer de la graisse à l'intérieur des fentes 39, 41.

A cet effet, l'installation 100 est configurée pour avoir une température régulée adaptée au matériau gras au moyen d'un climatiseur, notamment pour réguler la viscosité du matériau gras. Le moyen d'injection 166 est par exemple une aiguille ou une seringue, telle qu'illustré sur la figure 13.

De préférence, le système de nettoyage 140 et le système de graissage 164 sont combinés afin de déposer le matériau gras juste après avoir nettoyé les fentes permettant ainsi d'optimiser l'espace dans l'installation et un gain de temps.

Le dispositif 110 d'insertion de plaquettes d'étanchéité est automatisé et apte à interagir avec un secteur 34 supporté par une palette 102 du dispositif de transport 101.

Le dispositif 110 comporte un troisième bras robot 116 configuré pour insérer des plaquettes d'étanchéité 35, 37 dans les fentes d'une face latérale du secteur 34 pour former un secteur équipé.

Tel qu'illustré sur la figure 11, le dispositif 110 d'insertion de plaquettes d'étanchéité comprend en outre un système de préparation de plaquettes d'étanchéité 35, 37 comprenant un réceptacle 150, un quatrième bras robot 154 et un support (non illustré) de plaquettes. Le système de préparation de plaquettes d'étanchéité est automatisé.

Le réceptacle 150 est apte à recevoir et contenir une pluralité de plaquettes d'étanchéité 35, 37. Il comprend une pluralité de bacs 152 contenant chacun des plaquettes d'étanchéité 35, 37 en vrac. Chaque bac 152 comprend un même type de plaquettes 35, 37, c'est-à-dire ayant même forme et mêmes dimensions. Le type des plaquettes est ainsi différent d'un bac à l'autre.

Le quatrième bras robot 154 comporte un moyen de préhension 155 apte à saisir des plaquettes d'étanchéité 35, 37 dans le réceptacle et à les déposer sur le support de plaquettes. Par exemple, le moyen de préhension 155 du quatrième bras robot 154 se fait par aspiration d'air, par exemple un doigt ventouse.

Le quatrième bras robot 154 est configuré pour saisir successivement des plaquettes de types différents et donc destinées à des fentes différentes du secteur et à les déposer sur des zones respectives du support de plaquettes. Chaque zone est associée à un type de plaquette. Le support de plaquettes comporte en outre une zone supplémentaire permettant de retourner une des plaquettes si elle n'est pas déposée dans le bon sens pour être saisie par le troisième bras robot 116 pour ensuite être insérée. Le troisième bras robot 116 est configuré pour effectuer un tel retournement, le cas échéant.

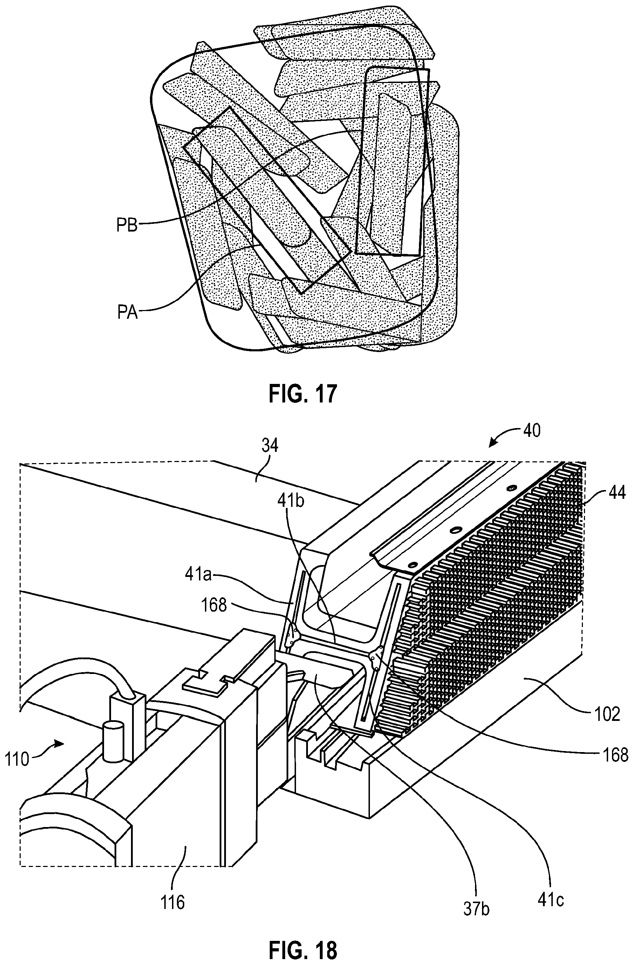

Le système de préparation de plaquettes comporte un moyen d'identification de plaquettes configuré pour identifier au moins une plaquette d'étanchéité préhensible dans un bac, c'est-à-dire conformée pour être prise par le moyen de préhension 155 du quatrième robot 154. De préférence, le moyen d'identification de plaquettes comporte une caméra 156 et met en oeuvre un logiciel de reconnaissance de formes. Un exemple d'acquisition par la caméra 156 du système d'identification de plaquettes est illustré sur la figure 17 et sera détaillée par la suite.

Le système de préparation de plaquettes comporte en outre un système 160 de génération d'un jet de gaz à l'intérieur du bac contenant des plaquettes du type défini si aucune plaquette d'étanchéité n'est préhensible par le moyen de préhension du quatrième bras robot 154. Le système 160 de génération du jet de gaz est fixé à un couvercle 162 destiné à fermer au moins le bac 152 afin de maintenir les plaquettes 35, 37 dans le bac 152 pendant l'injection d'air tel qu'illustré sur la figure 11.

Le troisième bras robot 116 est apte à saisir une plaquette d'étanchéité 35, 37 supportée par le support de plaquettes pour l'insérer dans une fente du secteur. A cet effet, le troisième bras robot 116 comporte un préhenseur tel qu'une pince de petites dimensions adaptée pour saisir une plaquette d'étanchéité 35, 37 prédéfinie. La plaquette à insérer est prédéfinie en fonction de la fente destinée à la recevoir.

Le troisième bras robot 116 est configuré pour positionner et orienter la plaquette d'étanchéité 35, 37 saisie par rapport au secteur 34 supporté par la palette 102 de transport pour l'introduire dans la fente destinée à la recevoir d'une des faces latérales du secteur. A cet effet et afin d'assurer la délicate insertion successive des plaquettes dans les fentes du secteur, le troisième bras robot 116 supportant les plaquettes est orientable dans une position prédéterminée via des moyens d'orientation et comporte un moyen d'identification automatisé des fentes et de leurs caractéristiques dans la position prédéterminée du secteur sur la palette de transport qu'elles soient ménagées dans la face latérale de la plateforme intérieure 40 et/ou de la plateforme extérieure 38. Le moyen d'identification automatisé des fentes est avantageusement configuré pour identifier, pour chaque fente, le type de la plaquette d'étanchéité à insérer dans la fente destinée à la recevoir en fonction des caractéristiques identifiées de ladite fente et donc identifier la plaquette d'étanchéité dudit type supportée par le support de plaquettes. A cet effet, le moyen d'identification automatisé comporte une caméra supportée par le troisième bras robot 116 et met en oeuvre un logiciel de reconnaissance de formes permettant notamment d'identifier la forme des fentes même recouvertes partiellement de graisse par extrapolation. Ainsi, chaque plaquette d'étanchéité prédéfinie peut être insérée dans la fente destinée à la recevoir en fonction des caractéristiques identifiées de ladite fente de façon précise et automatisée.

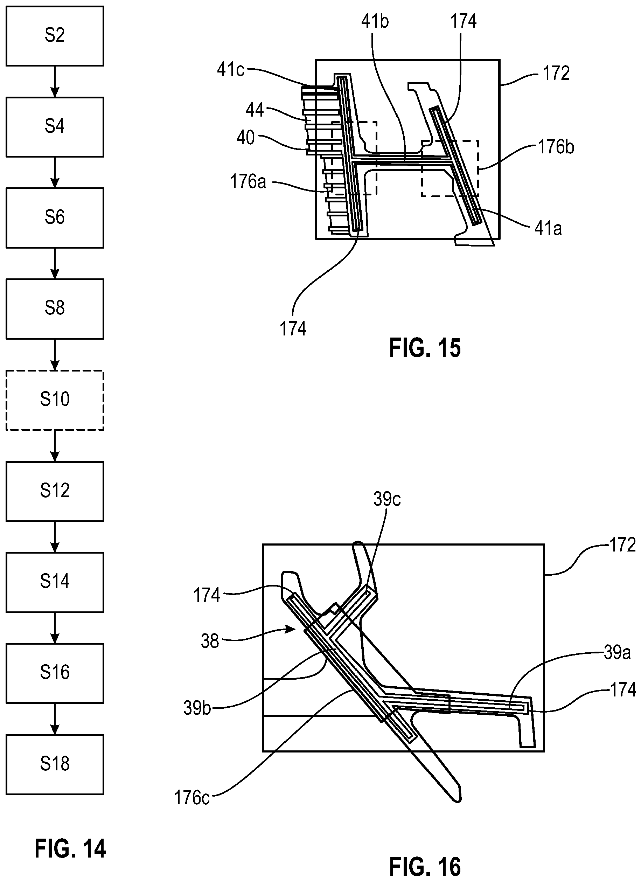

Un procédé de pré-assemblage, selon l'invention, des distributeurs d'une turbine au moyen d'une installation telle que décrite précédemment va maintenant être décrite en détail en regard de la figure 14.

Le procédé comprend une étape S2 de fourniture d'un chariot d'entrée 105 supportant l'ensemble des secteurs destinés à former les distributeurs de la turbine; et d'un chariot de sortie 108 comprenant une pluralité de plateaux 109, chaque plateau étant associé à un distributeur de la turbine.

Le chariot d'entrée 105 et le chariot de sortie108 sont installés respectivement sur les docks d'entrée 104 et de sortie 106 par un opérateur.

Le chariot d'entrée 105 est rempli de l'ensemble des secteurs 34 destinés à former l'ensemble des distributeurs des différents étages d'une turbine. Ainsi, le procédé de pré-assemblage des distributeurs est implémenté une seule fois pour tout un moteur limitant ainsi le nombre d'interventions d'opérateurs et augmentant ainsi l'efficacité et la rentabilité de l'installation.

De même, le chariot de sortie 108 est destiné à recevoir l'ensemble des secteurs préassemblés en distributeur d'un même étage de turbine sur chaque plateau 109, limitant également le nombre d'interventions d'opérateurs et de ce fait augmentant l'efficacité de l'installation.

L'opérateur lance met en oeuvre le procédé automatisé de préparation des secteurs et leur pré-assemblage sous forme de distributeurs via la console de l'installation en précisant le modèle de turbine et du moteur à fabriquer et par conséquent les distributeurs à assembler.

Pour chaque secteur 34 supporté par le chariot d'entrée 105, le procédé comprend une étape automatisée S4 de saisie d'un des secteurs par l'outil de préhension 114 du premier bras robot 112, une pince telle qu'illustrée en figure 8. Si besoin, le secteur 34 est recalé dans la pince 114, c'est-à-dire que la position et/ou l'orientation du secteur par rapport à la pince sont modifiées afin de correspondre à une position théorique prédéterminée.

Le procédé comporte en outre avantageusement une étape automatisée S6 d'identification du secteur par le système automatisé d'identification 122 et par conséquent d'identification du distributeur 32 auquel le secteur 34 en préparation est associé et le plateau 109 du chariot de sortie 108 correspondant au distributeur déterminé sur lequel déposer le secteur et le positionner au bon endroit de manière à pré-assembler le distributeur déterminé.

A cet effet, l'étape d'identification S6 comporte une étape de lecture d'un marquage surfacique correspondant à une référence du secteur 34 et une étape d'association de la référence lue du secteur à un distributeur déterminé de la turbomachine, i.e. à un étage de la turbomachine, en fonction de la base de données des références de l'ensemble des secteurs destinés à former les distributeurs de la turbomachine. La référence est lue par un moyen d'acquisition, par exemple une caméra associée à un logiciel de reconnaissance de caractères, le moyen d'acquisition étant supporté par un autre bras robot de l'installation, de préférence par le deuxième bras robot 142.

L'étape de lecture comporte avantageusement la lecture de chaque caractère de la référence et la vérification de chaque caractère invariant lu par comparaison avec les caractères invariants des références de la base de données, et l'identification de chaque caractère variant lu par comparaison avec les caractères variants des références de la base de données.

En effet, pour chaque étage de la turbomachine, l'identification de marquages possibles permet d'identifier des caractères variants et invariants dans les références des secteurs d'un même distributeur et même de déterminer un nombre limité de possibilités pour les caractères variants. Ainsi, cette étape de lecture telle que décrite précédemment permet de limiter le risque de lire un caractère à la place d'un autre et donc de fiabiliser la lecture des références des secteurs.

Avantageusement, le procédé comprend en outre pour chaque secteur 34 supporté par le premier bras robot 112 une étape automatisée S8 de contrôle de la qualité du secteur par le dispositif de contrôle de la qualité 124. Durant cette étape, plusieurs photos sont prises sous diverses orientations du secteur. La figure 10 illustre cette prise de photos par un moyen de capture d'images 126 pendant que le secteur 34 est supporté et orienté par le premier bras robot 112.

En particulier, durant cette étape de contrôle au moins la qualité des fentes ménagées dans les parois transversales du secteur, la qualité des bords de fuite et des surfaces des aubes du secteur et la qualité du bloc de matériau abradable en nid d'abeilles du secteur sont contrôlées.

Le contrôle du bloc de matériau abradable en nid d'abeilles est réalisé à partir de par exemple deux photos afin d'avoir une qualité d'image suffisante pour détecter les défauts de manière assez précise tel qu'illustré sur la figure 10.

A la fin de l'étape de contrôle, le secteur est déposé par le premier bras robot 112 sur une palette 102 et transporté jusqu'à la prochaine unité fonctionnelle pour la prochaine étape de préparation du secteur.

Si un défaut inadmissible est détecté sur une des parties du secteur, le secteur défectueux est déposé sur une palette 102 du dispositif de transport 101 et transporté jusqu'à un dispositif de contrôle manuel. Le contrôle manuel est effectué par un opérateur afin de confirmer ou infirmer que le défaut est inadmissible en vue de son recyclage et est remplacé par un autre secteur ou en vue d'une réparation éventuelle. Dans ce dernier cas ou si le défaut est finalement admissible, le secteur est replacé sur une palette 102 et transporté jusqu'à la prochaine unité fonctionnelle pour la prochaine étape de préparation du secteur.

Pour un nombre déterminé de distributeurs de la turbine et par conséquent pour leurs secteurs prédéfinis destinés à les former, le procédé comprend une étape automatisée S10 de pose d'un clinquant, ou dispositif anti-usure, . Les clinquants devant équipés les secteurs prédéfinis sont agencés sur un support multiple de clinquants. Un bras robot de l'installation, de préférence le premier bras robot 112, saisi un clinquant du support multiple et le dépose sur le support intermédiaire dans une position et une orientation prédéterminées de manière à permettre la fixation du clinquant sur le secteur. Ensuite, le premier bras robot 112 saisi un des secteurs prédéfinis supporté par une palette 102 de transport et le positionne et l'oriente par rapport au clinquant posé sur le support intermédiaire de manière à fixer le clinquant sur le secteur, par exemple par clipsage sur le moyen d'accrochage antérieur 48 du secteur 34.

Le secteur est ensuite déposé par le premier bras robot 112 sur une palette 102 de transport et transporté jusqu'à la prochaine unité fonctionnelle pour la prochaine étape de préparation du secteur. Ainsi, le premier bras robot 112 est alors disponible pour se saisir d'un autre secteur 34 dans le chariot d'entrée 104 et répéter les étapes S4 à S10.

Le procédé se poursuit pour le secteur préalablement identifié, contrôlé et éventuellement équipé d'un clinquant, supporté par une palette 102 de transport par une étape automatisée de transport jusqu'au dispositif 140 de nettoyage et de graissage.

Le procédé comporte une étape automatisée S12 de nettoyage, de préférence par air comprimé, des fentes 39, 41 du secteur 34 par le système 140 automatisé de nettoyage. Durant cette étape, le secteur 34 supporté par la palette 102 de transport est saisi par le deuxième bras robot 142. Ce dernier positionne et oriente le secteur par rapport à une buse de jet d'air comprimé pour nettoyer l'intérieur des fentes 39, 41.

Le procédé comporte en outre une étape, illustrée en figure 13, d'injection S14 du matériau gras dans les fentes dans des zones 176 autour de chaque intersection identifiée. La détermination de ces zones 176 est décrite ci-après.

Durant cette étape, un bras robot, de préférence le deuxième bras robot 142 supporte le support 34 et le positionne et l'oriente par rapport au système de graissage 164, notamment par rapport au moyen d'injection 166 pour déposer de la graisse à l'intérieur d'au moins une portion des fentes 39, 41.

Le secteur ainsi nettoyé et graissé est déposé par le deuxième bras robot 142, ou tout autre bras robot le supportant, sur une palette 102 de transport et transporté jusqu'au dispositif 110 automatisé d'insertion de plaquettes d'étanchéité. Ainsi, le deuxième bras robot 142, ou tout autre bras robot du dispositif de nettoyage et graissage, est alors disponible pour se saisir d'un autre secteur 34 supporté par une autre palette de transport et répéter les étapes de nettoyage S12 et de graissage S14.

Le procédé se poursuit pour le secteur nettoyé et graissé, supporté par une palette 102 du dispositif de transport 101, par une étape automatisée d'insertion S16 des plaquettes d'étanchéité dans les fentes d'une face latérale du secteur pour former un secteur équipé.

Cette étape S16 comporte une étape préalable automatisée de préparation S161 de plaquettes d'étanchéité 35, 37 telle qu'illustrée sur la figure 11.

Cette étape S161 de préparation de plaquettes comprend une sous-étape S1611 d'identification dans le réceptacle 150 d'au moins une plaquette d'étanchéité préhensible par le moyen de préhension du quatrième bras robot 154. Cette étape d'identification est réalisée au moyen d'une caméra 156, illustrée sur la figure 11, et d'un logiciel de reconnaissance de formes.

La figure 17 illustre une image acquise par la caméra 156 d'une vue de dessus d'un bac 152 contenant des plaquettes en vrac. Au cours de cette étape, la forme des plaquettes est détectée et sur l'exemple illustrée en figure 17, deux plaquettes préhensibles sont identifiées : une première notée PA est identifiée dans le bon sens et une seconde notée PB est identifiée à l'envers.

Une plaquette dans le bon sens signifie qu'elle peut être insérée directement dans une fente par le troisième bras robot 116 du dispositif d'insertion tandis qu'une plaquette à l'envers signifie qu'elle doit être retournée par le troisième bras robot 116 avant d'être insérée dans une fente.

L'étape S161 de préparation de plaquettes comprend ensuite une sous-étape S1612 de saisie par le quatrième bras robot 154 du dispositif 110, dans le réceptacle 150 d'une plaquette préhensible, grâce à son outil de préhension, de préférence un doigt ventouse et de dépose de la plaquette sur la zone correspondante au type de la plaquette saisie du support de plaquettes.

Le quatrième bras robot 154 est saisi successivement des plaquettes de types différents dans des bacs différents afin d'alimenter les différentes zones du support de plaquettes. Les plaquettes de différents types sont destinées à des fentes différentes du secteur.

Si aucune plaquette d'étanchéité n'est préhensible par le moyen de préhension dans le bac, un jet de gaz est généré à l'intérieur d'au moins un bac 152 du réceptacle 150 afin de soulever et mélanger les plaquettes d'étanchéité afin de fournir une plaquette préhensible tel qu'illustré sur la figure 12 au cours d'une sous-étape S1613.

Cette sous-étape S1613 peut être répétée s'il n'y a toujours aucune plaquette préhensible. Au bout de trois étapes de soufflage successif, si aucune plaquette n'est préhensible, un message d'alerte est généré sur la console pour l'opérateur.

L'étape automatisée d'insertion S16 comporte en outre une étape d'orientation S162 de plaquettes.

Cette étape d'orientation S162 comprend une sous-étape S1621 de saisie d'une plaquette 35, 37 par le troisième bras-robot 116, la plaquette 35, 37 étant supportée par le support de plaquettes.

Si la plaquette saisie n'est pas dans le bon sens, le troisième bras-robot 116 utilise la zone supplémentaire du support de plaquette pour retourner la plaquette afin qu'elle soit dans le bon sens au cours d'une sous-étape S1622.

Au cours de cette étape d'orientation S162 la plaquette d'étanchéité 35, 37 saisie est positionnée et orientée par rapport au secteur 34 supporté par la palette 102 de transport pour l'introduire dans la fente destinée à la recevoir d'une des faces latérales du secteur.

A cet effet, l'étape d'orientation S162 comporte une sous-étape S1623 d'identification automatisé des fentes et de leurs caractéristiques dans la position prédéterminée du secteur sur la palette de transport qu'elles soient ménagées dans la face latérale de la plateforme intérieure 40 et/ou de la plateforme extérieure 38. Cette sous-étape permet l'identification pour chaque fente du secteur, du type de la plaquette d'étanchéité à insérer dans la fente destinée à la recevoir en fonction des caractéristiques identifiées de ladite fente. Cette identification est réalisée par une caméra supportée par le troisième bras robot 116, supportant la plaquette à insérer, et met en oeuvre un logiciel de reconnaissance de formes permettant notamment d'identifier la forme des fentes même recouvertes partiellement de graisse par extrapolation.

Le secteur 34 est supporté par la palette de transport et bloqué dans une position et une orientation prédéterminée dite théorique permettant l'identification de caractéristiques des fentes. Cette position et orientation prédéterminée est vérifiée par le troisième bras robot 116. Ainsi, l'ensemble des fentes de la plateforme extérieure doit se situer dans une première zone 172 illustrée en continu sur la figure 15, de même pour la plateforme intérieure illustrée sur la figure 16.

L'étape d'identification comprend une reconnaissance automatisée des fentes et des caractéristiques des fentes du secteur dans la position prédéterminée, notamment leur orientation, leurs dimensions, leurs motifs et leurs intersections grâce à la caméra supportée par le troisième bras robot 116 associée au logiciel de reconnaissance de formes permettant notamment d'identifier la forme des fentes même recouvertes partiellement de graisse par extrapolation. Les figures 15 et 16 illustrent, respectivement pour la plateforme extérieure et pour la plateforme intérieure, la reconnaissance des fentes entourées par une zone 174 en pointillés et la définition de zones 176 autour de chaque intersection, marquées par des tirets sur les figures 15 et 16. Ainsi, deux zones 176a, 176b pour la dépose de la graisse sont identifiées pour un motif de fentes en H tel que visible sur la figure 15 tandis qu'une seule zone 176c pour la graisse est identifiée sur la figure 16 pour un motif de fentes en K.

La figure 18 illustre l'insertion par exemple d'une plaquette 37b dans une fente radiale 41b de la plateforme intérieure du secteur de la figure 4. La graisse 168 déposée aux deux intersections de la fente radiale 41b avec chaque fente tangentielle 41a, 41c est également bien visible.

Le secteur ainsi équipé de plaquettes est transporté par la palette 102 du dispositif de transport 101 jusqu'au dock de sortie 106.

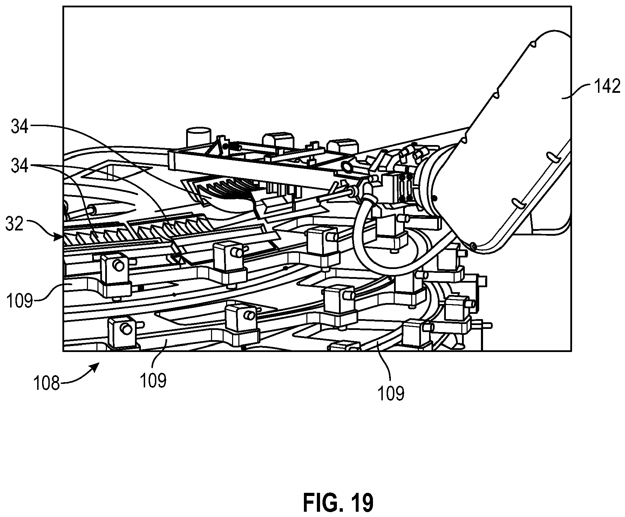

Au cours d'une étape automatisée S18, le deuxième bras robot 142 de l'installation saisit le secteur équipé et le dépose sur le chariot de sortie 108, plus précisément sur le plateau 109 associé au distributeur déterminé de manière à pré-assembler le distributeur déterminé tel qu'illustré sur la figure 19.

A cet effet, les plateaux supérieurs du chariot de sortie 108 sont soulevés par le premier actionneur par rapport au plateau 109 du distributeur en cours de montage permettant de désengager les plateaux supérieurs afin de rendre le plateau 109 sur lequel le secteur équipé doit être posé accessible. Par plateau supérieur on entend les plateaux situés au-dessus du plateau du distributeur en cours de pré-assemblage, c'est-à-dire associé au secteur équipé supporté par le deuxième bras robot 142.

Le plateau du distributeur en cours de montage est mis en rotation sur lui-même par le deuxième actionneur afin de rendre accessible la zone angulaire de dépose adaptée au secteur équipé supporté par le deuxième bras robot 142.

Lorsque tous les secteurs équipés sont déposés sur les plateaux 109 du chariot de sortie 108, les distributeurs de la turbine sont ainsi pré-assemblés. L'assemblage final des distributeurs consiste à juxtaposer tous les secteurs équipés d'un même plateau par insertion de l'extrémité libre des plaquettes d'un secteur équipé dans les fentes en vis-à-vis du secteur équipé voisin jusqu'à former la couronne entière d'aubages fixes.

Les étapes automatisées de ce procédé sont mises en oeuvre par ordinateur.

## Revendications

1. Dispositif (120) de contrôle des secteurs pour l'assemblage des distributeurs (32) d'une turbine (22), chaque distributeur étant formé d'un assemblage de secteurs (34) juxtaposés les uns aux autres, chaque secteur comportant une référence, le dispositif comportant :
- un système (122) automatisé d'identification du secteur comprenant un moyen de lecture de la référence du secteur,
- une base de données des références des secteurs destinés à former les distributeurs de la turbine, et
- un moyen d'association de la référence lue du secteur à un distributeur déterminé de la turbine.

2. Dispositif de contrôle selon la revendication 1, dans lequel les références des secteurs (34) comportent des caractères variants d'un secteur à un autre secteur et des caractères invariants d'un secteur à un autre secteur d'un même distributeur, le système automatisé d'identification du secteur comprend :
- un moyen de vérification de chaque caractère invariant lu par comparaison avec les caractères invariants des références de la base de données, et
- un moyen d'identification de chaque caractère variant lu par comparaison avec les caractères variants des références de la base de données.

3. Dispositif de contrôle selon la revendication 1 ou 2, dans lequel chaque secteur (34) comprend une plateforme intérieure (40), une plateforme extérieure (38), des aubes (42) comprenant chacune un bord de fuite et étant fixées entre ladite plateforme intérieure (40) et ladite plateforme extérieure (38), et un bloc (44) de matériau abradable en nid d'abeilles qui s'étend intérieurement à la plateforme intérieure (40) entre les faces latérales (43), et dans lequel la base de données comprend un jeu de caractéristiques techniques du secteur associé à chaque référence, le jeu de caractéristiques techniques comprenant au moins :
- un nombre déterminé de fentes (39, 41) ménagées dans des faces latérales (43) du secteur ;
- des caractéristiques techniques des fentes (39, 41) ;
- des caractéristiques physiques des plaquettes d'étanchéités (35, 37) destinées à être insérées dans chacune des fentes ;
- un nombre déterminé d'aubes (42) du secteur ;
- une position angulaire du secteur dans le distributeur déterminé.

4. Dispositif de contrôle selon la revendication 3, comprenant un système automatisé de contrôle de qualité du secteur configuré pour contrôler la qualité, en fonction des caractéristiques techniques du secteur :
- des fentes (39, 41) ménagées dans les faces latérales (43) du secteur,
- des bords de fuite et des surfaces des aubes (42), et
- du bloc (44) de matériau abradable en nid d'abeilles.

5. Dispositif de contrôle selon l'une des revendications 1 à 4, comprenant un moyen de capture d'images (126) du secteur selon différentes orientations du secteur par rapport au moyen de capture d'images, le secteur étant supporté par un bras robot (112) mobile par rapport au moyen de capture d'images.

6. Installation pour le pré-assemblage des distributeurs d'une turbine (22), la turbine comprenant une pluralité de distributeurs formés chacun d'un assemblage de secteurs (34) juxtaposés les uns aux autres, l'installation comportant :
- un chariot d'entrée (105) configuré pour transporter et supporter un ensemble de secteurs destinés à former les distributeurs de la turbine, chaque secteur de l'ensemble comportant des faces latérales et des fentes (39, 41) ménagées dans les faces latérales et étant associé à un distributeur déterminé ;
- un chariot de sortie (108) comprenant une pluralité de plateaux (109), chaque plateau étant associé à un distributeur (32) de la turbine ;
- un dispositif de transport (101) de secteurs (34) comportant au moins une palette (102) apte à transporter un secteur (34), le dispositif de transport étant automatisé ;
- un premier bras robot (112) apte à saisir un secteur (34) du chariot d'entrée (104) et à le déposer sur une palette (102) du dispositif de transport ;
- un dispositif (110) d'insertion de plaquettes d'étanchéité (35, 37) automatisé et apte à interagir avec un secteur (34) transporté par le dispositif automatisé de transport, le dispositif (110) d'insertion de plaquettes d'étanchéité comportant un deuxième bras robot (116) apte à insérer des plaquettes d'étanchéité (35, 37) dans les fentes (39, 41) d'une face latérale (43) du secteur transporté pour former un secteur équipé ; et
- un troisième bras-robot (142) apte à saisir un secteur (34) équipé transporté par une palette du dispositif de transport et à le déposer et le positionner sur le plateau (109) associé au distributeur déterminé de manière à pré-assembler le distributeur déterminé, et
- un dispositif (120) de contrôle des secteurs pour l'assemblage des distributeurs (32) d'une turbine (22 selon l'une des revendications précédentes.

7. Procédé de contrôle des secteurs pour l'assemblage des distributeurs d'une turbine au moyen d'un dispositif de contrôle selon l'une quelconque des revendications 1 à 5, **caractérisé en ce qu'**il comprend, pour chaque secteur des étapes automatisées de :
- lecture de la référence du secteur, et
- association de la référence lue du secteur à un distributeur déterminé de la turbine en fonction de la base de données des références des secteurs destinés à former les distributeurs de la turbine.

8. Procédé de contrôle selon la revendication 7, dans lequel les références des secteurs comportent des caractères variants d'un secteur à un autre secteur et des caractères invariants d'un secteur à un autre secteur d'un même distributeur, le procédé comprenant une étape automatisée d'identification du secteur comprenant :
- une vérification de chaque caractère invariant lu par comparaison avec les caractères invariants des références de la base de données, et
- une identification de chaque caractère variant lu par comparaison avec les caractères variants des références de la base de données.

9. Procédé de contrôle selon la revendication 7 ou 8 lorsqu'elle dépend de la revendication 3, comporte une étape automatisée de contrôle de qualité du secteur en fonction des caractéristiques techniques du secteur, comprenant le contrôle de la qualité de :
- des fentes (39, 41) ménagées dans les faces latérales (43) du secteur,
- des bords de fuite et des surfaces des aubes (42), et
- du bloc (44) de matériau abradable en nid d'abeilles.

10. Procédé de pré-assemblage des distributeurs d'une turbine au moyen d'une installation (100) pour le pré-assemblage des distributeurs (32) de la turbine (22) selon la revendication 6, les distributeurs étant formés chacun d'un assemblage de secteurs (34) juxtaposés les uns aux autres, le procédé comportant les étapes de :
- fourniture d'un chariot d'entrée (105) supportant l'ensemble des secteurs (34) destinés à former les distributeurs de la turbine, chaque secteur de l'ensemble comportant des faces latérales (43) et des fentes (39, 41) ménagées dans les faces latérales et étant associé à un distributeur déterminé ;
- fourniture d'un chariot de sortie (108) comprenant une pluralité de plateaux (109), chaque plateau (109) étant associé à un distributeur de la turbine,
- contrôle des secteurs pour l'assemblage des distributeurs d'une turbine selon un procédé de contrôle selon l'une quelconque des revendications 7 à 9,
et pour chaque secteur (34), les étapes automatisées de :
- saisie d'un des secteurs du chariot d'entrée (104) et dépose de celui-ci sur une palette (102) du dispositif de transport (101) par le premier bras robot (112) ;
- transport du secteur (34) par le dispositif de transport jusqu'au dispositif (110) d'insertion de plaquettes d'étanchéité (35, 37) ;
- insertion (S16) automatisée des plaquettes d'étanchéité (35, 37) dans les fentes (39, 41) d'une face latérale du secteur supporté par le deuxième bras robot (116) pour former un secteur équipé ;
- dépose et positionnement (S18) du secteur équipé sur le plateau (109) associé au distributeur déterminé par le troisième bras-robot (142) de manière à pré-assembler le distributeur déterminé.

## Patentansprüche

1. Kontrollvorrichtung (120) der Sektoren für den Zusammenbau der Verteiler (32) einer Turbine (22), wobei jeder Verteiler aus einem Zusammenbau von Sektoren (34) gebildet ist, die nebeneinander liegen, wobei jeder Sektor eine Referenz umfasst, wobei die Vorrichtung Folgendes umfasst:
- ein automatisiertes Identifikationssystem (122) des Sektors, das ein Mittel zum Lesen der Referenz des Sektors umfasst,
- eine Datenbank der Referenzen der Sektoren, die dazu bestimmt sind, die Verteiler der Turbine zu bilden, und
- ein Mittel zum Assoziieren der gelesenen Referenz des Sektors mit einem bestimmten Verteiler der Turbine.

2. Kontrollvorrichtung nach Anspruch 1, wobei die Referenzen der Sektoren (34) von einem Sektor zu einem anderen Sektor variierende Merkmale und invariante Merkmale von einem Sektor zu einem anderen Sektor desselben Verteilers umfassen, wobei das automatisierte System zum Identifizieren des Sektors Folgendes umfasst:
- ein Mittel zum Prüfen jedes gelesenen invarianten Merkmals durch Vergleich mit den invarianten Merkmalen der Referenzen der Datenbank, und
- ein Mittel zur Identifikation jedes gelesenen variierenden Merkmals, durch Vergleichen mit den variierenden Merkmalen der Referenzen der Datenbank.

3. Kontrollvorrichtung nach Anspruch 1 oder 2, wobei jeder Sektor (34) eine innere Plattform (40), eine äußere Plattform (38), Schaufeln (42), die jeweils eine Hinterkante umfassen und zwischen der inneren Plattform (40) und der äußeren Plattform (38) befestigt sind, umfasst, und einen Block (44) aus abreibbarem Material in Wabenform, der sich innerhalb der inneren Plattform (40) zwischen den Seitenflächen (43) erstreckt, und wobei die Datenbank einen Satz technischer Charakteristiken des Sektors umfasst, der mit jeder Referenz assoziiert ist, wobei der Satz technischer Charakteristiken mindestens Folgendes umfasst:
- eine bestimmte Anzahl von Schlitzen (39, 41), die in den Seitenflächen (43) des Sektors eingerichtet sind;
- technische Charakteristiken der Schlitze (39, 41);
- physische Charakteristiken der Abdichtungsplatten (35, 37), die dazu bestimmt sind, in jeden der Schlitze eingesetzt zu sein;
- eine bestimmte Anzahl von Schaufeln (42) des Sektors;
- eine Winkelposition des Sektors in dem bestimmten Verteiler.

4. Kontrollvorrichtung nach Anspruch 3, die ein automatisches System zur Qualitätskontrolle des Sektors umfasst, das dazu konfiguriert ist, die Qualität in Abhängigkeit von den technischen Charakteristiken des Sektors zu kontrollieren:
- der Schlitze (39, 41), die in den Seitenflächen (43) des Sektors eingerichtet sind,
- der Hinterkanten und der Oberflächen der Schaufeln (42), und
- des Blocks (44) aus abreibbarem Material in Wabenform.

5. Kontrollvorrichtung nach einem der Ansprüche 1 bis 4, die ein Aufzeichnungsmittel von Bildern (126) des Sektors gemäß unterschiedlichen Ausrichtungen des Sektors in Bezug auf das Aufzeichnungsmittel von Bildern umfasst, wobei der Sektor von einem Roboterarm (112) getragen wird, der in Bezug auf das Aufzeichnungsmittel von Bildern beweglich ist.

6. Anlage für die Vormontage der Verteiler einer Turbine (22), wobei die Turbine eine Vielzahl von Verteilern umfasst, die jeweils aus einem Zusammenbau von Sektoren (34), die nebeneinander liegen, gebildet sind, wobei die Anlage Folgendes umfasst:
- einen Eingangsschlitten (105), der dazu konfiguriert ist, eine Einheit von Sektoren, die dazu bestimmt sind, die Verteiler der Turbine zu bilden, zu transportieren und zu tragen, wobei jeder Sektor der Einheit Seitenflächen und Schlitze (39, 41), die in den Seitenflächen eingerichtet und mit einem bestimmten Verteiler assoziiert sind, umfasst;
- einen Ausgangsschlitten (108), der eine Vielzahl von Platten (109) umfasst, wobei jede Platte mit einem Verteiler (32) der Turbine assoziiert ist;
- eine Transportvorrichtung (101) von Sektoren (34), die mindestens eine Palette (102) umfasst, die dazu in der Lage ist, einen Sektor (34) zu transportieren, wobei die Transportvorrichtung automatisiert ist;
- einen ersten Roboterarm (112), der dazu in der Lage ist, einen Sektor (34) von dem Eingangsschlitten (104) aufzunehmen und auf einer Palette (102) der Transportvorrichtung abzulegen;
- eine Einsetzvorrichtung (110) der Abdichtungsplatten (35, 37), die automatisiert und dazu in der Lage ist, mit einem Sektor (34), der von der automatisierten Transportvorrichtung transportiert wird, zu interagieren, wobei die Einsetzvorrichtung (110) von Abdichtungsplatten einen zweiten Roboterarm (116) umfasst, der dazu in der Lage ist, Abdichtungsplatten (35, 37) in den Schlitzen (39, 41) einer Seitenfläche (43) des transportierten Sektors einzusetzen, um einen bestückten Sektor zu bilden; und
- einen dritten Roboterarm (142), der dazu in der Lage ist, einen bestückten Sektor (34), der von einer Palette der Transportvorrichtung transportiert wird, aufzunehmen und ihn auf der Platte (109), die mit dem bestimmten Verteiler assoziiert ist, derart abzulegen, dass der bestimmte Verteiler vormontiert wird, und
- eine Kontrollvorrichtung (120) der Sektoren für den Zusammenbau der Verteiler (32) einer Turbine (22) nach einem der vorstehenden Ansprüche.

7. Kontrollverfahren der Sektoren für den Zusammenbau der Verteiler einer Turbine mittels einer Kontrollvorrichtung nach einem der Ansprüche 1 bis 5, **dadurch gekennzeichnet, dass** es für jeden Sektor automatisierte Schritte umfasst zum:
- Lesen der Referenz des Sektors, und
- Assoziieren der gelesenen Referenz des Sektors mit einem bestimmten Verteiler der Turbine in Abhängigkeit von der Datenbank der Referenzen der Sektoren, die dazu bestimmt sind, die Verteiler der Turbine zu bilden.

8. Kontrollverfahren nach Anspruch 7, wobei die Referenzen der Sektoren von einem Sektor zu einem anderen Sektor variierende Merkmale und invariante Merkmale von einem Sektor zu einem anderen Sektor desselben Verteilers umfassen, wobei das automatisierte Verfahren einen automatisierten Identifikationsschritt des Sektors umfasst, der Folgendes umfasst:
- eine Prüfung jedes gelesenen invarianten Merkmals durch Vergleich mit den invarianten Merkmalen der Referenzen der Datenbank, und
- eine Identifikation jedes gelesenen variierenden Merkmals durch Vergleich mit den variierenden Merkmalen der Referenzen der Datenbank.

9. Kontrollverfahren nach Anspruch 7 oder 8, wenn er von Anspruch 3 abhängt, das einen automatisierten Qualitätsprüfungskontrollschritt des Sektors in Abhängigkeit von den technischen Charakteristiken des Sektors umfasst, das die Qualitätskontrolle umfasst:
- der Schlitze (39, 41), die in den Seitenflächen (43) des Sektors eingerichtet sind,
- der Hinterkanten und der Oberflächen der Schaufeln (42), und
- des Blocks (44) aus abreibbarem Material in Wabenform.

10. Verfahren zur Vormontage der Verteiler einer Turbine mittels einer Anlage (100) für die Vormontage der Verteiler (32) der Turbine (22) nach Anspruch 6, wobei die Verteiler jeweils aus einem Zusammenbau nebeneinander liegender Sektoren (34) gebildet sind, wobei das Verfahren die folgenden Schritte umfasst:
- Liefern eines Eingangsschlittens (105), der die Einheit der Sektoren (34) trägt, die dazu bestimmt sind, die Verteiler der Turbine zu bilden, wobei jeder Sektor der Einheit Seitenflächen (43) und Schlitze (39, 41) umfasst, die in den Seitenflächen eingerichtet und mit einem bestimmten Verteiler assoziiert sind;
- Lieferung eines Ausgangsschlittens (108), der eine Vielzahl von Platten (109) umfasst, wobei jede Platte (109) mit einem Verteiler der Turbine assoziiert ist,
- Kontrolle der Sektoren für den Zusammenbau der Verteiler einer Turbine gemäß einem Kontrollverfahren nach einem der Ansprüche 7 bis 9,
und für jeden Sektor (34) die folgenden automatisierten Schritte:
- Aufnehmen eines der Sektoren von dem Eingangsschlitten (104) und dessen Ablegen auf einer Palette (102) der Transportvorrichtung (101) durch den ersten Roboterarm (112);
- Transport des Sektors (34) durch die Transportvorrichtung bis zu der Vorrichtung (110) zum Einsetzen der Abdichtungsplatten (35, 37);
- automatisiertes Einsetzen (S16) der Abdichtungsplatten (35, 37) in den Schlitzen (39, 41) einer Seitenfläche des Sektors, der von dem zweiten Roboterarm (116) getragen wird, um einen bestückten Sektor zu bilden;
- Ablegen und Positionieren (S18) des bestückten Sektors auf der Platte (109), die mit dem bestimmt Verteiler assoziiert ist, durch den dritten Roboterarm (142) derart, dass der bestimmte Verteiler vormontiert wird.

## Claims

1. A control device (120) of sectors for the assembly of turbine stators (32) of a turbine (22), each turbine stator being formed of an assembly of sectors (34) juxtaposed to one another, each sector comprising a reference, the device comprising:
- an automated system (122) for identifying the sector comprising means for reading the sector reference,
- a database of the references of the sectors intended to form the turbine stators of the turbine, and
- means for associating the read reference of the sector with a determined turbine stator of the turbine.

2. The control device according to claim 1, wherein the references of the sectors (34) comprise characters that vary from one sector to another sector and characters that are invariant from one sector to another sector of the same turbine stator, the automated system for identifying the sector comprises:
- means for verifying each invariant character read by comparison with the invariant characters of the references of the database, and
- means for identifying each variant character read by comparison with the variant characters of the references of the database.

3. The control device according to claim 1 or 2, wherein each sector (34) comprises an inner platform (40), an outer platform (38), vanes (42) each comprising a trailing edge and being attached between said inner platform (40) and said outer platform (38) and a block (44) of abradable honeycomb material extending towards the inside of the inner platform (40) between the side faces (43), and wherein the database comprises a set of technical characteristics of the sector associated with each reference, the set of technical characteristics including at least:
- a determined number of slots (39, 41) arranged in side faces (43) of the sector;
- technical characteristics of the slots (39, 41);
- physical characteristics of the sealing pads (35, 37) intended to be inserted in each of the slots;
- a determined number of vanes (42) of the sector;
- an angular position of the sector in the determined turbine stator.

4. The control device according to claim 3, comprising an automated system of quality control of the sector configured to control the quality, according to the technical characteristics of the sector, of:
- the slots (39, 41) arranged in the side faces (43) of the sector,
- the trailing edges and the surfaces of the vanes (42), and
- the block (44) of abradable honeycomb material.

5. The control device according to one of the claims 1 to 4, comprising image capturing means (126) of the sector according to different orientations of the sector with respect to the image capturing means, the sector being supported by a robot arm (112) movable with respect to the image capturing means.

6. An installation for pre-assembling turbine stators (32) of a turbine (22), the turbine comprising a plurality of turbine stators each formed of an assembly of sectors (34) juxtaposed to one another, the installation comprising:
- an input carriage (105) configured to convey and support a set of sectors intended to form the turbine stators of the turbine, each sector of the set comprising side faces and slots (39, 41) provided in the side faces and being associated with a given turbine stator;
- an output carriage (108) comprising a plurality of trays (109), each tray being associated with a turbine stator (32) of the turbine;
- a device (101) for conveying sectors (34) comprising at least one pallet (102) adapted to convey a sector (34), the conveying device being automated;
- a first robot arm (112) adapted to grip a sector (34) of the input carriage (104) and to deposit it on a pallet (102) of the conveying device;
- an automated device (110) for inserting sealing pads (35, 37) and adapted to interact with a sector (34) conveyed by the automated conveying device, the device (110) for inserting sealing pads comprising a second robot arm (116) adapted to insert sealing pads (35, 37) into the slots (39, 41) in a side face (43) of the conveyed sector to form an equipped sector;
- a third robot arm (142) adapted to grip an equipped sector (34) conveyed by a pallet of the conveying device and to deposit it and to position it on the tray (109) associated with the given turbine stator so as to pre-assemble the given turbine stator, and
- a control device (120) of sectors for the assembly of turbine stators (32) of a turbine (22) according to one of the preceding claims.

7. A control method of the sectors for the assembly of the turbine stators of a turbine by means of a control device according to any one of claims 1 to 5, **characterised in that** it comprises, for each sector of the automated steps of:
- reading the reference of the sector, and
- associating the read reference of the sector with a determined turbine stator of the turbine as a function of the database of the references of the sectors intended to form the turbine stators of the turbine.

8. The control method according to claim 7, wherein the references of the sectors comprise characters that vary from one sector to another sector and characters that are invariant from one sector to another sector of the same turbine stator, the method comprising an automated step for identifying the sector comprising:
- verifying each invariant character read by comparison with the invariant characters of the references of the database, and
- identifying each variant character read by comparison with the variant characters of the references of the database.

9. The control method according to claim 7 or 8 when dependent on claim 3, comprises an automated step of quality control of the sector according to the technical characteristics of the sector, comprising quality control of:
- the slots (39, 41) arranged in the side faces (43) of the sector,
- the trailing edges and the surfaces of the vanes (42), and
- the block (44) of abradable honeycomb material.

10. A method for pre-assembling the turbine stators of a turbine by means of an installation (100) for pre-assembling the turbine stators (32) of the turbine (22) according to claim 6, the turbine stators each being formed by an assembly of sectors (34) juxtaposed to one another, the method comprising the steps of:
- providing an input carriage (105) supporting the set of sectors (34) intended to form the turbine stators of the turbine, each sector of the set comprising side faces (43) and slots (39, 41) provided in the side faces and being associated with a given turbine stator;
- providing an output carriage (108) comprising a plurality of trays (109), each tray (109) being associated with a turbine stator of the turbine,
- controlling the sectors for the assembly of the turbine stators of a turbine according to a control method according to any of claims 7 to 9,
and for each sector (34), the automated steps of:
- gripping one of the sectors of the input carriage (104) and depositing it on a pallet (102) of the conveying device (101) by the first robot arm (112);
- conveying the sector (34) by the conveying device to the device (110) for inserting sealing pads (35, 37);
- inserting (S16) in an automated manner the sealing pads (35, 37) into the slots (39, 41) in a side face of the sector supported by the second robot arm (116) to form an equipped sector;
- removing and positioning (S18) the equipped sector on the tray (109) associated with the turbine stator determined by the third robot arm (142) so as to pre-assemble the determined turbine stator.
